# EUROPÄISCHE PATENTSCHRIFT

(11) **EP 0 705 387 B1**
(45) Veröffentlichungstag und Bekanntmachung des Hinweises auf die Patenterteilung: **13.11.1996**
(21) Anmeldenummer: 94916898.3
(22) Anmeldetag: 10.06.1994
(51) Int. Cl.: F04B 53/14

(54) **DRUCKMITTELDURCHSTRÖMTER KOLBEN EINER HUBKOLBENPUMPE**
PISTON OF A RECIPROCATING PUMP THROUGH WHICH PRESSURE MEDIUM FLOWS
PISTON D'UNE POMPE A PISTON ALTERNATIF, TRAVERSE PAR UN FLUIDE HYDRAULIQUE

(30) Priorität: 24.06.1993 DE 4320902
(43) Veröffentlichungstag der Anmeldung: 10.04.1996
(73) Patentinhaber: ROBERT BOSCH GMBH, 70442 Stuttgart (DE)
(72) Erfinder: ZIRPS, Wilhelm, D-71282 Hemmingen (DE); SCHULLER, Wolfgang, D-74343 Sachsenheim (DE); URBAN, Martin, D-87544 Blaichach (DE)
(86) Internationale Anmeldenummer: DE9400651
(87) Internationale Veröffentlichungsnummer: WO9500759

(56) Entgegenhaltungen:
- FR-A- 1 218 349
- FR-A- 2 191 621
- GB-A- 694 037
- US-A- 3 156 189
- US-A- 3 692 438

## Beschreibung

### Stand der Technik

Die Erfindung geht aus von einem druckmitteldurchströmten Kolben einer Hubkolbenpumpe nach dem Oberbegriff des Hauptanspruchs. Ein solcher Kolben ist bereits aus FR-A-2 191 621 bekannt. Bei derartigen Kolbenpumpen wird angestrebt, den schädlichen Raum so klein wie möglich zu machen. Es ist daher aus FR-PS 1 218 349 eine Pumpe bekannt, bei der das Einlaßventil in den einteilig ausgebildeten Kolben eingelassen ist und mit dem Ventilteller seines Schließgliedes mit der Kolbenstirnseite bündig abschließt. Der vom Ventilteller ausgehende Schaft des Schließgliedes ist in einer Längsbohrung des Kolbens passend geführt. Die als Sackbohrung ausgebildete Längsbohrung ist zum Bohrungsgrund hin im Durchmesser erweitert und nimmt dort eine Schließfeder des Einlaßventils auf. Diese ist als zylindrische Schraubendruckfeder ausgebildet und greift einerseits an einer Schulter der abgestuften Längsbohrung und andererseits an einer kopf artigen Verdickung am Schaftende des Schließgliedes an. Bei der Wiedergabe dieses Entwicklungsstandes in der genannten Veröffentlichung handelt es sich um eine schematische Darstellung, denn der verdickte Schaft des Schließgliedes und die auf den Schaft abgestimmte Längsbohrung des Kolbens lassen eine Montage von Schließglied und Schließfeder bei einem einteiligen Kolben von der Kolbenstirnseite her nicht zu.

### Vorteile der Erfindung

Der erfindungsgemäße Kolben mit den kennzeichnenden Merkmalen des Hauptanspruchs hat demgegenüber den Vorteil, die Schließfeder mit dem Schaft des Schließgliedes auf relativ einfache Weise in die Längsbohrung einführen und mit einer am Ventilteller angreifenden Drehbewegung bis zur Anlage hinter der Schulter der Längsbohrung in diese schraubenartig einziehen zu können. Mit dem Erreichen der Einbaulage ist gleichzeitig die Vorspannung der Schließfeder erzeugbar. Eine mehrteilige Ausbildung des Kolbens ist daher entbehrlich.

Durch die in den Unteransprüchen aufgeführten Maßnahmen sind vorteilhafte Weiterbildungen und Verbesserungen des im Hauptanspruch angegebenen Kolbens möglich.

Die im Anspruch 2 angegebene Maßnahme ist vorteilhaft, weil diese nur durch eine besondere Formgebung der Schulter das Einziehen der Feder ohne zusätzliche Hilfsmittel möglich macht.

Mit den in den Ansprüchen 3 und 4 gekennzeichneten Ausgestaltungen des erfindungsgemäßen Kolbens ist mit einfachen Bauteilen die Funktion der Schulter in der Längsbohrung sowohl für die Federabstützung als auch für das schraubenartige Einziehen der Feder in die Bohrung erzielt. Dabei greift der jeweilige Vorsprung zwischen Federwindungen ein und bewirkt beim Drehen des Schließgliedes um seine Längsachse die Einziehbewegung der Schließfeder in die Längsbohrung.

Die im Anspruch 5 angegebene Weiterbildung der Erfindung dient der Befestigung der Schließfeder am Schaft des Schließgliedes bei der Montage und der axialen Abstützung der vorgespannten Schließfeder am die Einschnürung ventiltellerabgewandt begrenzenden Schaftabschnitt.

Mit der in den Ansprüchen 6 und 7 gekennzeichneten Ausgestaltung ist auf einfache Weise eine Formschlußverbindung zwischen der Schließfeder und dem Schaft des Schließgliedes geschaffen, um das zum schraubenartigen Eindrehen der Schließfeder in die Längsbohrung erforderliche Drehmoment zu übertragen.

Die im Anspruch 8 angegebene Maßnahme macht eine Führung des Schließgliedes an seinem Schaft überflüssig und verlagert diese in die Zylinderbohrung, ohne den Druckmittelfluß abzusperren. Der beispielsweise kugelscheibenförmig ausgebildete Ventilteller vermag sich daher gegenüber seinem Kegelstumpfform aufweisenden Ventilsitz auszurichten und ermöglicht eine nahezu querkraftfreie Übertragung der Schließkraft auf den Ventilsitz.

### Zeichnung

Ausführungsbeispiele der Erfindung sind in der Zeichnung vereinfacht dargestellt und in der nachfolgenden Beschreibung näher erläutert. Es zeigen Figur 1 einen Längsschnitt eines Pumpenelementes einer Hubkolbenpumpe mit einem im Kolben angeordneten Einlaßventil, dessen Schließfeder an einer Schulter in einer Längsbohrung des Kolbens und an einem Schaft eines Schließgliedes des Ventils angreift, Figuren 2 bis 6 Ausführungsbeispiele für die Gestaltung der Schulter in der Längsbohrung, wobei Figur 2 im Längsschnitt eine Schulter mit wendelnutförmiger Durchbrechung, Figuren 3 (Längsschnitt) und 4 (Stirnansicht) eine von einem Sprengring und Figuren 5 (Längsschnitt) und 6 (Stirnansicht) eine von einer Hülse gebildete Schulter zeigen, sowie Figuren 7 und 8 die Schließfeder in Vorder- und Seitenansicht.

### Ausführungsbeispiele

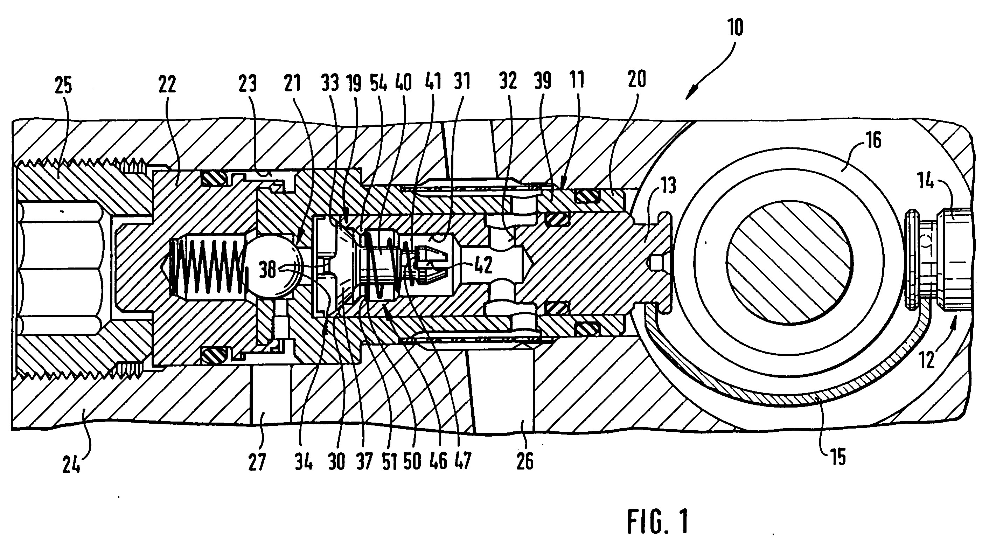

Die Darstellung nach Figur 1 zeigt eine Hubkolbenpumpe 10 für schlupfgeregelte Bremsanlagen von Kraftfahrzeugen. Die Hubkolbenpumpe 10 weist zwei Pumpenelemente 11 und 12 auf, von denen das Pumpenelement 11 vollständig im Längsschnitt wiedergegeben ist. Die Pumpenelemente 11 und 12 haben je einen Kolben 13 und 14, welche durch eine Bügelfeder 15 miteinander gekuppelt sind. Die Kolben 13 und 14 sind an einem Exzenter 16, der durch einen nicht dargestellten Elektromotor antreibbar ist, abgestützt. Da die beiden Pumpenelemente 11 und 12 baugleich sind, wird nachfolgend das Ausführungsbeispiel anhand des Pumpenelementes 11 beschrieben.

Der Kolben 13 ist exzenterabgewandt mit einem Einlaßventil 19 versehen und in einem Zylinder 20 längsgeführt. Der Zylinder 20 ist exzenterabgewandt mit einem Auslaßventil 21 ausgestattet und mit einem Ventilgehäuse 22 verbunden. Das somit im wesentlichen aus dem Kolben 13 mit Einlaßventil 19 und dem Zylinder 20 mit Auslaßventil 21 und Ventilgehäuse 22 bestehende Pumpenelement 11 ist in eine Bohrung 23 eines Gehäuses 24 eingesteckt und mit einer Verschlußschraube 25 befestigt. Das Gehäuse 24 ist mit einer Druckmittelzuführung 26 sowie mit einer Druckmittelableitung 27 versehen.

Im einzelnen haben der Kolben 13 und das Einlaßventil 19 folgende Ausgestaltung:

Der Kolben 13 weist eine von seiner exzenterabgewandten Kolbenstirnseite 30 ausgehende Längsbohrung 31 auf, welche abgestuft etwa in der Kolbenmitte endet. Am Bohrungsgrund steht die Längsbohrung 31 durch eine Querbohrung 32 mit der Druckmittelzuführung 26 in Verbindung. Im Bereich der Kolbenstirnseite 30 geht die Längsbohrung 31 in einen konischen Ventilsitz 33 für ein Schließglied 34 des Einlaßventils 19 über. Der Kolben 13 ist somit von der Querbohrung 32 zum Ventilsitz 33 druckmitteldurchströmt.

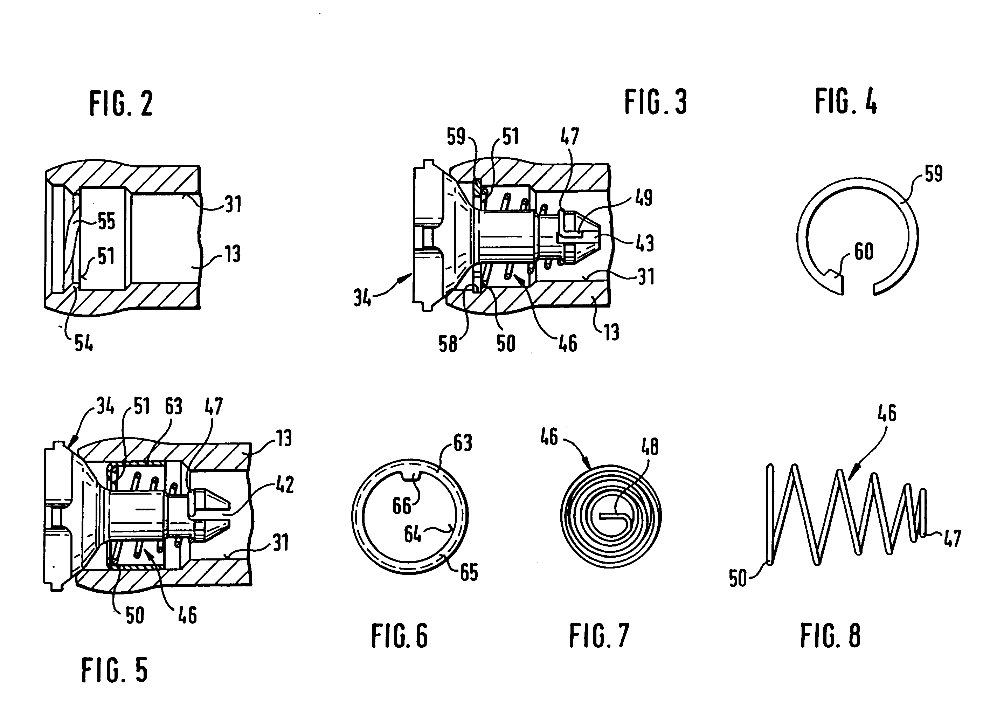

Das Schließglied 34 des Einlaßventils 19 hat einen kugelzonenförmig ausgebildeten Ventilteller 37 für den Angriff am Ventilsitz 33. Der Ventilteller 37 ragt über die Kolbenstirnseite 30 heraus. An diesem Abschnitt ist er mit über dem Umfang verteilten Vorsprüngen 38 für die Führung an einer Bohrungswand 39 des den Kolben 13 aufnehmenden Zylinders 20 versehen. Vom Ventilteller 37 des Schließgliedes 34 geht ein im wesentlichen kreiszylindrischer Schaft 40 aus, der berührungsfrei in der Längsbohrung 31 des Kolbens 13 aufgenommen ist. Der Schaft 40 ist ventiltellerabgewandt mit einer Einschnürung 41 versehen. An seinem freien, kegelstumpfförmig ausgebildeten Ende ist der Schaft 40 beim in den Figuren 1 und 5 dargestellten Ausführungsbeispiel mit einem von der Einschnürung 41 ausgehenden Längsschlitz 42 ausgestattet. Beim Ausführungsbeispiel nach Figur 3 weist der Schaft 40 statt des Längsschlitzes 42 eine Längsnut 43 auf.

Zum Einlaßventil 19 gehört außerdem eine vorgespannte Schließfeder 46, mit welcher der Ventilteller 37 am Ventilsitz 33 abgestützt ist. Die in den Figuren 7 und 8 entspannt wiedergegebene Schließfeder 46 ist als im wesentlichen kegelstumpfförmige Schraubendruckfeder ausgebildet. Die Schließfeder 46 hat an ihrem durchmesserkleineren Endabschnitt 47 einen quer zu ihrer Längsachse verlaufenden Drahtabschnitt 48. Mit diesem Drahtabschnitt 48 greift die Schließfeder 46 bei den Ausführungsbeispielen nach den Figuren 1 und 5 in den Längsschlitz 42 ein, während die den durchmesserkleineren Endabschnitt 47 bildende Windung passend die Einschnürung 41 des Schaftes 40 umschlingt. Beim Ausführungsbeispiel nach Figur 3 ist dagegen an den durchmesserkleineren Endabschnitt 47 der Schließfeder 46 ein parallel zur Längsachse verlaufender Drahtabschnitt 49 angeformt. Mit diesem greift die Schließfeder 46 in die Längsnut 43 des Schaftes 40 ein. Diese beiden Ausgestaltungen der Schließfeder 46 erlauben zum einen die Übertragung einer Axialkraft auf den Schaft 40 des Schließgliedes 34, zum anderen ist eine drehmomentübertragende, formschlüssige Verbindung zwischen der Schließfeder und dem Schaft des Schließgliedes erzielt.

Wie die Figuren 1, 3 und 5 erkennen lassen, ist die Schließfeder 46 vollständig in der Längsbohrung 31 des Kolbens 13 aufgenommen. Sie stützt sich mit ihrem durchmessergrößeren Endabschnitt 50 an einer vom Ventilsitz 33 abgewandten Flanke 51 einer ventilsitzseitigen Schulter der Längsbohrung 31 ab.

Beim Ausführungsbeispiel nach den Figuren 1 und 2 ist die Schulter als ringförmiger Vorsprung 54 des Kolbens 13 ausgebildet. Dieser Vorsprung 54 weist wenigstens eine wendelnutförmige Durchbrechung 55, beispielsweise nach Art eines Gewindegangs, auf.

Beim Ausführungsbeispiel nach den Figuren 3 und 4 ist die Schulter von einem in einer Nut 58 der Längsbohrung 31 aufgenommenen Sprengring 59 gebildet. Dieser Sprengring 59 hat wenigstens einen radial nach innen gerichteten Vorsprung 60, wie dies aus Figur 4 in der Stirnansicht des Sprengringes deutlich erkennbar ist.

Beim Ausführungsbeispiel nach den Figuren 5 und 6 ist die Schulter von einer in die Längsbohrung 31 eingepreßten Hülse 63 mit einem eine Öffnung 64 aufweisenden Boden 65 gebildet. Hier geht vom Bodenrand wenigstens ein radial nach innen gerichteter Vorsprung 66 aus.

Der ringförmige Vorsprung 54 (Figuren 1 und 2), der Sprengring 59 (Figuren 3 und 4) und die Hülse 63 (Figuren 5 und 6) sind in ihrem Durchmesser derart abgestimmt, daß sich die Schließfeder 46 an der vom Ventilsitz 33 abgewandten Flanke 51 der derart gebildeten Schulter sicher mit Vorspannung abstützt, um die Schließkraft des Einlaßventils 19 auf das Schließglied 34 zu übertragen.

Die einteilige Ausgestaltung des Kolbens 13 macht es erforderlich, die Schließfeder 46 von der Kolbenstirnseite 30 her in die Längsbohrung 31 einzubringen. Dies geschieht auf folgende Weise:

Die Schließfeder 46 wird auf den Schaft 40 des Schließgliedes 34 gesteckt, so daß sich der durchmessergroße Endabschnitt 50 am Ventilteller 37 abstützt und der durchmesserkleine Endabschnitt 47 in der Einschnürung 41 am Schaft 40 angreift. Bei den Ausführungsbeispielen nach den Figuren 1 und 5 greift der Drahtabschnitt 48 der Schließfeder 46 in den Längsschlitz 42, beim Ausführungsbeispiel nach Figur 3 der Drahtabschnitt 49 in die Längsnut 43 des Schaftes 40 ein. Die Schließfeder 46 ist jetzt mit ihrem durchmesserkleineren Endabschnitt 47 unverdrehbar am Schaft 40 des Schließgliedes 34 gehalten.

Das Schließglied 34 wird nun mit dem Schaft 40 und der darauf sitzenden Schließfeder 46 von der Kolbenstirnseite 30 her in die Längsbohrung 31 eingeführt. Bei dem Ausführungsbeispiel gemäß den Figuren 1 und 2 greift die Schließfeder 46 mit ihrem mittleren Bereich an dem die Schulter bildenden ringförmigen Vorsprung 54 der Längsbohrung 31 an. Durch Drehen des Schließgliedes 34 im Uhrzeigersinn (gesehen auf die vom Schaft 40 abgewandte Stirnseite des Ventiltellers 37) gelangt eine Windung der rechtsgängig gewickelten Schließfeder 46 in Eingriff mit der wenigstens einen wendelnutförmigen Durchbrechung 55 des ringförmigen Vorsprungs 54. Durch fortgesetztes Drehen des Schließgliedes 34 wird die Schließfeder 46 schraubenartig in die Längsbohrung 31 hineingezogen, bis der durchmessergrößere Endabschnitt 50 den ringförmigen Vorsprung 54 überwunden hat. Der beim Eindrehen eingeschnürte durchmessergrößere Endabschnitt 50 der Schließfeder 46 federt nach dem Überwinden des ringförmigen Vorsprunges 54 elastisch auf und greift nun an der ventilsitzabgewandten Flanke 51 an. Mit dem Erreichen dieser Montagestellung hat die Schließfeder 46 zugleich ihre vorbestimmte Vorspannkraft erreicht.

In gleicher Weise erfolgt die Montage der Schließfeder 46 bei den Ausführungsbeispielen nach den Figuren 3 bis 6. Hier greift der wenigstens eine Vorsprung 60 am Sprengring 59 bzw. der Vorsprung 66 am Boden 65 der Hülse 63 zwischen zwei Windungen der Schließfeder 46 und bewirkt somit durch schraubenartigen Angriff am durchmessergrößeren Endabschnitt 50 ein Eindrehen der Schließfeder 46 in die Längsbohrung 31 des Kolbens 13.

## Patentansprüche

1. Druckmitteldurchströmter Kolben (13) einer Hubkolbenpumpe (10), insbesondere für schlupfgeregelte Bremsanlagen von Kraftfahrzeugen, mit den folgenden Merkmalen:
- am Kolben (13) ist ein Einlaßventil (19) vorgesehen,
- der Kolben (13) weist eine mit einer Druckmittelzuführung (26) in Verbindung stehende Längsbohrung (31) auf,
- im Bereich der Kolbenstirnseite (30) mündet die Längsbohrung (31) in einen Ventilsitz (33) des Einlaßventils (19),
- ein Ventilteller (37) eines Schließgliedes (34) des Einlaßventils (19) ist am Ventilsitz (33) abgestützt,
- ein vom Ventilteller (37) ausgehender Schaft (40) des Schließgliedes (34) taucht in die Längsbohrung (31) des Kolbens (13) ein,
- eine vorgespannte Schließfeder (46) des Einlaßventils (19) ist auf dem Schaft (40) aufgenommen und greift einerseits am Schaft (40) und andererseits an einer vom Ventilsitz (33) abgewandten Flanke einer ventilsitzseitigen Schulter der Längsbohrung (31) an,
gekennzeichnet durch die weiteren Merkmale:
- der Schaft (40) des Schließgliedes (34) ist von einer wenigstens annähernd kegelstumpfförmigen Schraubendruckfeder als Schließfeder (46) umgriffen,
- die Schließfeder (46) ist mit ihrem durchmesserkleineren Endabschnitt (47) am Schaft (40) unverdrehbar gehalten,
- die Schulter der Längsbohrung (31) weist wenigstens eine Querschnittsänderung für den schraubenartigen Angriff am durchmessergrößeren Endabschnitt (50) der Schließfeder (46) auf.

2. Kolben nach Anspruch 1, dadurch gekennzeichnet, daß die Schulter ein ringförmiger Vorsprung (54) des Kolbens (13) mit wenigstens einer wendelnutförmigen Durchbrechung (55) ist.

3. Kolben nach Anspruch 1, dadurch gekennzeichnet, daß die Schulter ein in die Längsbohrung (31) eingefügter Sprengring (59) mit wenigstens einem radial nach innen gerichteten Vorsprung (60) ist.

4. Kolben nach Anspruch 1, dadurch gekennzeichnet, daß die Schulter vom eine Öffnung (64) aufweisenden Boden (65) einer in die Längsbohrung (31) eingepreßten Hülse (63) gebildet ist, von deren Bodenrand wenigstens ein radial nach innen gerichteter Vorsprung (66) ausgeht.

5. Kolben nach Anspruch 1, dadurch gekennzeichnet, daß der Schaft (40) des Schließgliedes (34) ventiltellerabgewandt eine Einschnürung (41) aufweist, welche die Schließfeder (46) mit wenigstens einer Windung passend umschlingt.

6. Kolben nach Anspruch 5, dadurch gekennzeichnet, daß von der Einschnürung (41) des Schaftes (40) eine Längsnut (43) ausgeht, in welche ein parallel zum Schaft (40) verlaufender Drahtabschnitt (49) der Schließfeder (46) eingreift.

7. Kolben nach Anspruch 5, dadurch gekennzeichnet, daß von der Einschnürung (41) des Schaftes (40) ein Längsschlitz (42) ausgeht, in den ein quer zum Schaft (40) verlaufender Drahtabschnitt (48) der Schließfeder (46) eingreift.

8. Kolben nach Anspruch 1, dadurch gekennzeichnet, daß der Schaft (40) des Schließgliedes (34) berührungsfrei in der Längsbohrung (31) des Kolbens (13) aufgenommen ist, während der Ventilteller (37) an einem über die Kolbenstirnseite (30) ragenden Abschnitt über dem Umfang verteilte Vorsprünge (38) für den Angriff an einer Bohrungswand (39) eines den Kolben (13) aufnehmenden Zylinders (20) aufweist.

## Claims

1. Piston (13), flowed through by pressure medium, of a reciprocating piston pump (10), in particular for slip-regulated braking systems of motor vehicles, having the following features:
- on the piston (13) there is provided an inlet valve (19),
- the piston (13) exhibits a longitudinal bore (31) connected to a pressure-medium supply (26),
- in the region of the piston face (30), the longitudinal bore (31) opens out into a valve seat (33) of the inlet valve (19),
- a valve disc (37) of a closing member (34) of the inlet valve (19) is supported against the valve seat (33),
- a stem (40) of the closing member (34), which stem emanates from the valve disc (37), plunges into the longitudinal bore (31) of the piston (13),
- a biased closing spring (46) of the inlet valve (19) is received on the stem (40) and acts, on the one hand, upon the stem (40) and, on the other hand, upon a flank, facing away from the valve seat (33), of a shoulder of the longitudinal bore (31), which shoulder is located on the valve seat side,
characterized by the following features:
- the stem (40) of the closing member (34) is embraced by an at least approximately frustoconical helical compression spring acting as a closing spring (46),
- the closing spring (46) is held, with its end segment (47) of smaller diameter, non-twistably against the stem (40),
- the shoulder of the longitudinal bore (31) exhibits at least one cross-sectional alteration for the screw-like action upon the end segment (50) of larger diameter of the closing spring (46).

2. Piston according to Claim 1, characterized in that the shoulder is an annular projection (54) of the piston (13) having at least one helical-groove-shaped aperture (55).

3. Piston according to Claim 1, characterized in that the shoulder is a snap ring (59), inserted into the longitudinal bore (31), having at least one radially inwardly directed projection (60).

4. Piston according to Claim 1, characterized in that the shoulder is formed by the base (65), exhibiting an opening (64), of a sleeve (63) which is pressed into the longitudinal bore (31) and from the bottom rim of which at least one radially inwardly directed projection (66) emanates.

5. Piston according to Claim 1, characterized in that the stem (40) of the closing member (34) exhibits, facing away from the valve disc, a constriction (41), which snugly envelops the closing spring (46) with at least one winding.

6. Piston according to Claim 5, characterized in that emanating from the constriction (41) of the stem (40) there is a longitudinal groove (43), in which a wire segment (49) of the closing spring (46), running parallel to the stem (40), engages.

7. Piston according to Claim 5, characterized in that emanating from the constriction (41) of the stem (40) there is a longitudinal slot (42), in which a wire segment (48) of the closing spring (46), running transversely to the stem (40), engages.

8. Piston according to Claim 1, characterized in that the stem (40) of the closing member (34) is received in a contact-free manner in the longitudinal bore (31) of the piston (13), whilst the valve disc (37) exhibits, on a segment jutting over the piston face (30), projections (38), which are distributed over the periphery, for acting upon a bore wall (39) of a cylinder (20) receiving the piston (13).

## Revendications

1. Piston (13), traversé par un fluide hydraulique, d'une pompe à piston alternatif (10), en particulier pour des installations de freinage de véhicules à moteur avec régulation antipatinage, ayant les caractéristiques suivantes :
- on a prévu sur le piston (13) une soupape d'admission (19),
- le piston (13) présente un alésage longitudinal (31) qui est en liaison avec une arrivée de fluide hydraulique (26),
- dans la zone de la face frontale du piston (30) l'alésage longitudinal (31) débouche dans un siège de soupape (33) de la soupape d'admission (19),
- une tête de soupape (37) d'un organe de fermeture (34) de la soupape d'admission (19) prend appui sur le siège de soupape (33),
- une tige (40) de l'organe de fermeture (34), qui part de la tête de soupape (37), s'enfonce dans l'alésage longitudinal (31) du piston (13),
- un ressort précontraint de fermeture (46) de la soupape d'admission (19) est logé sur la tige (40) et vient en prise d'une part sur la tige (40) et d'autre part sur un flanc d'un épaulement de l'alésage longitudinal (31) qui est situé à l'opposé du siège de soupape (33),
caractérisé par
les autres particularités suivantes :
- la tige (40) de l'organe de fermeture (34) est entourée par au moins un ressort de compression à boudin ayant approximativement la forme d'un cône tronqué, en tant que ressort de fermeture (46),
- le ressort de fermeture (46) est maintenu sans pouvoir tourner sur l'arbre (40), par sa section terminale (47) de plus petit diamètre,
- l'épaulement de l'alésage longitudinal (31) présente au moins une variation de sa section transversale pour venir en prise à la manière d'une vis sur la section terminale (50) de plus grand diamètre du ressort de fermeture (46).

2. Piston selon la revendication 1,
caractérisé en ce que
l'épaulement est une saillie de forme annulaire (54) du piston (13), avec au moins un ajour (55) ayant la forme d'une rainure ondulée.

3. Piston selon la revendication 1,
caractérisé en ce que
l'épaulement est un jonc élastique (59) introduit dans l'alésage longitudinal (31), avec au moins une saillie (60) orientée radialement vers l'intérieur.

4. Piston selon la revendication 1
caractérisé en ce que
l'épaulement est formé par un manchon (63) enfoncé à la presse dans l'alésage longitudinal (31), par le fond (65) présentant une ouverture (64), tandis qu'au moins une saillie (66), orientée radialement vers l'intérieur, part du bord du fond du manchon.

5. Piston selon la revendication 1,
caractérisé en ce que
la tige (40) de l'organe de fermeture (34) présente, à l'opposé de la tête de soupape, un rétrécissement (41) que le ressort de fermeture (46) entoure par au moins une spire de façon ajustée.

6. Piston selon la revendication 5,
caractérisé en ce qu'
une rainure longitudinale (43) part du rétrécissement (41) de la tige (40), rainure dans laquelle vient en prise une section du fil de ressort de fermeture (46), qui s'étend parallèlement à la tige (40).

7. Piston selon la revendication 5,
caractérisé en ce qu'
une fente longitudinale (42) part du rétrécissement (41) de la tige (40), fente dans laquelle vient en prise une section (48) du fil de ressort de fermeture (46), qui s'étend perpendiculairement à la tige (40).

8. Piston selon la revendication 1,
caractérisé en ce que
la tige (40) de l'organe de fermeture (34) est logée sans contact dans l'alésage longitudinal (31) du piston (13), tandis que la tête de soupape (37) présente, sur une section qui fait saillie sur la face frontale du piston (30), des saillies (38), réparties sur le pourtour, qui viennent en prise sur une paroi de l'alésage (39) d'un cylindre (20) qui reçoit le piston (13).
